# EUROPEAN PATENT APPLICATION

(11) **EP 2 808 078 A1**
(43) Date of publication of application: **03.12.2014**
(21) Application number: 14180506.9
(22) Date of filing: 22.06.2011
(51) Int. Cl.: B01J 19/28, B01J 19/08, C08F 2/01, C08F 10/02, C08J 3/24, C08F 6/00, B01J 19/22, B01J 19/12, B01J 19/18, C08J 3/12, C08L 33/02

(54) **Polymerization reactors for the preparation of superabsorbent polymer and preparation method thereof using the same**

(30) Priority: 22.06.2010 KR 20100059166
(62) Divisional of application: 11798379.1
(71) Applicant: LG Chem, Ltd., Youngdungpo-gu, Seoul 150-721 (KR)
(72) Inventor: Lee, Sang-Gi, 308-728 Daejeon (KR); Kim, Gi-Cheul, 305-340 Daejeon (KR); Kim, Kyu-Pal, 305-810 Daejeon (KR); Park, Sung-Soo, 152-093 Seoul (KR); Won, Tae-Young, 305-340 Daejeon (KR); Leem, Gyu, 302-280 Daejeon (KR); Han, Chang-Sun, 305-720 Daejeon (KR)
(74) Representative: Goddar, Heinz J.

(57) **Abstract**

Disclosed is a polymerization reactor for the preparation of a superabsorbent polymer, and a method for preparing a superabsorbent polymer using the same. More particularly, the polymerization reactor comprises a gel pulverization part positioned between the first belt polymerization reactor and the second belt polymerization reactor.

## Description

### BACKGROUND OF THE INVENTION

### (a) Field of the Invention

This disclosure relates to a polymerization reactor for the preparation of a superabsorbent polymer, and a method for preparing a superabsorbent polymer using the same.

### (b) Description of the Related Art

A superabsorbent polymer (SAP) is a synthetic polymer material that is capable of absorbing about five hundred to one thousand times its own weight of moisture, and it is variously called a superabsorbency material (SAM), an absorbent gel material (AGM), and the like according to developers. The superabsorbent polymer has begun to be commercialized for sanitary pads, and currently, it is widely used as a horticultural aid to supply water to soil, water stops for civil engineering or building, a sheet for raising of seedlings, an agent for maintaining freshness in the field of food distribution, a material for packing, and the like, in addition to personal hygiene items such as a paper diaper.

As a method of preparing the superabsorbent polymer, reverse phase suspension polymerization, aqueous solution polymerization, and the like are known. The reverse phase suspension polymerization is disclosed in Japan laid-open patent publication Sho. 56-161408, Japan laid-open patent publication Sho. 57-158209, Japan laid-open patent publication Sho. 57-198714, and the like. The aqueous solution polymerization includes thermal polymerization wherein a hydrous gel-type polymer is broken, cooled, and polymerized in a kneader equipped with multiple axes, and photopolymerization wherein a high concentration of an aqueous solution is polymerized and simultaneously dried by irradiating UV and the like thereto on a belt. Meanwhile, to obtain a hydrous gel-type polymer with excellent properties, a method of supplying a predetermined amount of a monomer composition to a belt and irradiating light thereto has recently been widely used. However, the polymerization method on a belt does not have high polymerization efficiency because a polymerization energy source such as UV and the like is delivered only to a certain part, and has a limitation in improvement of properties of a superabsorbent polymer due to residual monomers.

Therefore, the inventors studied to solve the problems of the low conversion rate and high residual monomer contents, which have been problems of the conventional method of polymerization on a belt, while using a method of polymerization on a belt to prepare a superabsorbent polymer with excellent properties, and completed the present invention.

### SUMMARY OF THE INVENTION

It is an object of the present invention to provide a polymerization reactor for the preparation of a superabsorbent polymer that is capable of preparing a superabsorbent polymer with low residual monomer contents and excellent properties, and a method for preparing a superabsorbent polymer using the same.

The present invention provides a polymerization reactor for the preparation of a superabsorbent polymer including: a first belt polymerization reactor and a second belt polymerization reactor that respectively include two or more rotation axes; a conveyer belt installed between the axes and formed so as to proceed in a predetermined direction by the rotation of the rotation axes; and a polymerization energy supply part positioned over the conveyer belt, wherein the second belt polymerization reactor is arranged so as to supply polymerization energy to a second side opposite to a first side of a sheet-type polymer gel to which polymerization energy is supplied from the first belt polymerization reactor.

The present invention also provides a polymerization reactor for the preparation of a superabsorbent polymer, including: a first belt polymerization reactor and a second belt polymerization reactor that respectively include two or more rotation axes, a conveyer belt installed between the axes and formed so as to proceed in a predetermined direction by the rotation of the rotation axes. and a polymerization energy supply part positioned over the conveyer belt; and a polymer gel pulverization part positioned between the first beh polymerization reactor and the second belt polymerization reactor, wherein the polymer gel pulverization part and the second belt polymerization reactor are arranged so that a sheet-type polymer gel polymerized in the first belt polymerization reactor may be pulverized in the polymer gel pulverization part, and then conveyed on the conveyer belt of the second belt polymerization reactor.

The present invention also provides a polymerization reactor for the preparation of a superabsorbent polymer, including: a belt polymerization reactor that includes two or more rotation axes, a conveyer belt installed between the axes and formed so as to progress in a predetermined direction by the rotation of the rotation axes, and a first polymerization energy supply part positioned on the conveyer belt; and a second polymerization energy supply part installed so as to supply polymerization energy to both sides of a sheet-type polymer gel that is polymerized in the belt polymerization reactor and drops at the end of the conveyer belt.

The present invention also provides a method of preparing a superabsorbent polymer using the above-described polymerization reactors for the preparation of a superabsorbent polymer.

### BRIEF DESCRIPTION OF THE DRAWINGS

Fig. 1 schematically shows the polymerization reactor for the preparation of superabsorbent polymer according to one embodiment of the present invention.
Fig. 2 schematically shows the polymerization reactor for the preparation of superabsorbent polymer according to another embodiment of the present invention.
Fig. 3 schematically shows the polymerization reactor for the preparation of superabsorbent polymer according to yet another embodiment of the present invention.

### DETAILED DESCRIPTION OF THE EMBODIMENTS

Hereinafter, a polymerization reactor for the preparation of a superabsorbent polymer and a method of preparing a superabsorbent polymer using the same according to specific embodiments of the invention will be explained in detail.

According to one embodiment of the invention, provided is a polymerization reactor for the preparation of a superabsorbent polymer, including: a first belt polymerization reactor and a second belt polymerization reactor that respectively include two or more rotation axes; a conveyer belt installed between the axes and formed so as to proceed in a predetermined direction by rotation of the rotation axes; and a polymerization energy supply part positioned over the conveyer belt. wherein the second belt polymerization reactor is arranged so as to supply polymerization energy to a second side opposite to a first side of a sheet-type polymer gel on which polymerization energy is supplied from the first belt polymerization reactor.

As explained in detail in an embodiment of a method of preparing a superabsorbent polymer, the above polymerization reactor for the preparation of a superabsorbent polymer may evenly deliver polymerization energy from the first belt polymerization reactor to the first side of a sheet-type polymer gel (or a monomer composition) as well as the second side that is a back side of the first side. Thus, a polymerization reaction may evenly occur on both sides of the sheet-type polymer gel to increase polymerization efficiency and minimize residual monomer content.

Further, a cross-linking polymerization reaction may evenly occur over the whole volume of the monomer composition and/or sheet-type polymer gel by the polymerization energy supplied from the polymerization energy supply part, and thus residual monomer contents may be minimized, and the finally prepared superabsorbent polymer may exhibit excellent properties.

Meanwhile, in the polymerization reactor according to the above embodiment, the second belt polymerization reactor is installed below the first belt polymerization reactor. Specifically, it may be designed such that a monomer composition having proceeded from one end to the other end of the conveyer belt of the first belt polymerization reactor may drop to the one end of the conveyer belt of the second belt polymerization reactor and proceed to the other end of the conveyer belt of the second belt polymerization reactor. That is, to arrange the second belt polymerization reactor so as to supply polymerization energy to the second side opposite to the first side of the sheet-type polymer gel to which polymerization energy is supplied from the first belt polymerization reactor, the second polymerization reactor may be installed below the first belt polymerization reactor.

If the second belt polymerization reactor is installed in parallel below the first polymerization reactor, a sheet-type polymer gel having proceeded to the other end of the conveyer belt of the first belt polymerization reactor may drop to the one end of the second belt polymerization reactor without a separate means, and thus the second side of the sheet-type polymer gel to which polymerization energy is not directly supplied from the first belt polymerization reactor may be exposed on the surface and directly supplied with polymerization energy.

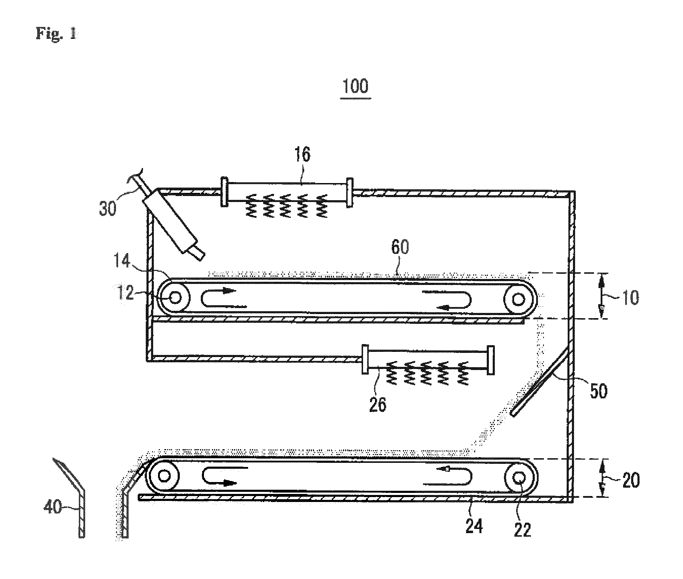

Fig. 1 schematically shows the polymerization reactor. As shown in Fig. 1, the polymerization reactor (100) according to one embodiment of the present invention consists of a first belt polymerization reactor (10) including rotation axes (12), a conveyer belt (14), and a polymerization energy supply part (16), and a second belt polymerization reactor (20) including rotation axes (22), a conveyer belt (24), and a polymerization energy supply part (26). The second belt polymerization reactor may be arranged such that polymerization energy may be supplied to the second side opposite to the first side of a sheet-type polymer gel to which polymerization energy is supplied from the first belt polymerization reactor, and for this, the second polymerization reactor may be installed under the first belt as shown in Fig. 1.

As shown in Fig. 1, a monomer composition supplied to the conveyer belt (14) of the first belt polymerization reactor moves from one end to the other end of the conveyer belt along the movement of the conveyer belt (14) by the rotation of the rotation axes (12). Thus, the monomer composition progresses through a polymerization reaction by polymerization energy supplied from the polymerization energy supply part (16) of the first polymerization reactor during the movement. Further, the sheet-type polymer gel having moved to the other end of the first belt polymerization reactor drops to the one end of the second belt polymerization reactor (20) and proceeds to the other end of the conveyer belt (24) of the second belt polymerization reactor.

At this time. in order to drop the sheet-type polymer gel having moved to the other end of the first polymerization reactor so as to supply it to the second belt polymerization reactor installed below the first polymerization reactor, the moving directions of the axes of the first belt polymerization reactor and the second belt polymerization reactor may be opposite to each other. In this way, the sheet-type polymer gel may drop such that the second side opposite to the first side of the sheet-type polymer gel having proceeded to the other end of the first belt polymerization reactor may be exposed on the top side of the conveyer belt of the second belt polymerization reactor, and it may be conveyed to the second belt polymerization reactor without a separate operation. Thus, polymerization energy may be evenly supplied throughout the whole volume of the monomer composition supplied to the second belt polymerization reactor, and a polymer gel wherein a cross-linking polymerization reaction evenly occurs may be obtained.

Meanwhile, according to another embodiment of the present invention, a polymerization reactor is provided wherein at least one belt polymerization reactor including two or more rotation axes, a conveyer belt installed between the axes and formed so as to proceed in a predetermined direction by the rotation of the rotation axes, and a polymerization energy supply part positioned over the conveyer belt is additionally installed below the second polymerization reactor of the polymerization reactor according to the above embodiment.

By additionally installing the polymerization reactor in multiple stages, polymerization energy may be evenly supplied to both sides of the sheet-type polymer gel to further improve polymerization efficiency. The number of polymerization reactors additionally installed on the bottom of the second polymerization reactor may be determined considering polymerization reaction conditions, production efficiency, production amount, production cost, and the like, without limitation.

Moreover, the polymerization reactor according to the above embodiments may further include a polymer protection film formed on the surface of the conveyer belt of the first belt polymerization reactor. The monomer composition supplied to the surface of the conveyer belt of the first belt polymerization reactor has viscosity to some degree, and although it moves to the end of the conveyer belt and progresses through the polymerization reaction to become a sheet-type polymer gel, polymer gel pollutants may remain on the surface of the belt at a contact part of the belt surface and the sheet-type polymer gel. Thus, if the polymerization reactor is operated for a certain time, the pollutants may be mixed with a supplied monomer composition to decrease polymerization efficiency and deteriorate properties of a finally produced superabsorbent polymer.

To solve the above problem, the surface of the conveyer belt of the first belt polymerization reactor should be separately cleaned after operation for a certain time. On the other hand, in the case of a conveyer belt surface of the second belt polymerization reactor, a sheet-type polymer gel having little viscosity is supplied because polymerization has progressed to some degree, and thus the problem that has arisen on the first conveyer belt surface does not substantially arise. Meanwhile, a belt polymerization reactor further including a polymer protection film formed on the conveyer belt surface of the first belt polymerization reactor may overcome the problem of belt surface pollution of the first belt polymerization reactor. Specifically, the polymer protection film is formed on the surface of the conveyer belt so as to be easily removed after operation several times or for a certain period. In addition, if the polluted polymer protection film is removed after operation for a certain period and then a new polymer protection film is added and the belt polymerization reactor is operated, production efficiency may be increased and operation may become easy.

The polymer film may include a polyvinyl chloride (PVC) film, a polyethylene (PE) film, a Teflon (polytetrafluoroethylene) film, a Teflon-coated film, a polymer complex film of two or more kinds selected from the group consisting of PVC, PE, and Teflon, a film coated with a polymer complex of two or more kinds selected from the group consisting of PVC, PE, and Teflon, and the like, but is not limited thereto. Any polymer film may be used as long as it is made of a material with a moisture content above a certain level and to which a polymer gel is not adhered.

Meanwhile, in order to prevent adhering of the monomer composition on the surface of the conveyer belt of the first polymerization reactor, a polymer protection film that may be easily removed may be used as mentioned above, or the conveyer belt surface of the first belt polymerization reactor itself may be coated with the monomer composition or material to which a polymer gel is not easily adhered. The material that may be used for the coating of the conveyer belt surface is not specifically limited as long as it may easily separate a polymer gel, and preferably, Teflon, silicon, or a polyimide, and the like may be used. Further, the belt surface may be coated with a copolymer including two or more kinds selected from the group consisting of Teflon, silicon, and a polyimide.

Moreover, the polymerization reactor according to the above embodiment may further include a guide member (50) for conveying the monomer composition falling from the other end of the conveyer belt of the first belt polymerization reactor to the one end of the conveyer belt of the second polymerization reactor. The guide member (50) is as shown in Fig. 1. Although the sheet-type polymer gel having proceeded to the other end of the first belt polymerization reactor may fall free on the conveyer belt of the second belt polymerization reactor and further polymerization may progress without the guide member, the installation of the guide member allows easier conveyance of the sheet-type polymer gel to the second belt polymerization reactor.

The angle between the guide member and the inner wall of the polymerization reactor may be appropriately determined considering the viscosity of the sheet-type monomer composition polymerized in the first belt polymerization reactor, the degree of adhesion to the first belt polymerization reactor, and the like. Preferably, the guide member may be constructed so as to make an angle of about 10° to 75° with the inner wall of the polymerization reactor, and in some cases, a joining part of the inner wall and the guide member may be designed so as to control the angle. To easily supply the sheet-type polymer gel polymerized in the first belt polymerization reactor to the second belt polymerization reactor, the angle between the guide member and the inner wall of the polymerization reactor may be more preferably about 5° to 50°, and most preferably about 10° to 45°.

Further, in the polymerization reactors according to the above-explained embodiments, the polymerization energy supply part is not specifically limited as long as it may deliver polymerization energy to the monomer composition for preparing a superabsorbent polymer, and it may be selected from the group consisting of an UV irradiation part, a hot wind supply part, a microwave irradiation part, and an infrared irradiation part. Preferably, the polymerization energy supply part of the first belt polymerization reactor may be a UV irradiation part, and the polymerization energy supply part of the second belt polymerization reactor may be selected from the group consisting of an UV irradiation part, a hot wind supply part, a microwave irradiation part, and an infrared irradiation part. If the UV irradiation part is used as the polymerization energy supply part of the first belt polymerization reactor, polymerization energy may be evenly delivered to the monomer composition that is widely supplied to the first belt polymerization reactor in a sheet shape, and thus a cross-linking polymerization reaction may efficiently occur.

Further, if necessary, multiple polymerization energy supply parts may be installed along the length direction of the conveyer belt. Fig. 1 shows a polymerization reactor wherein one polymerization energy supply part (16) is installed in the first belt polymerization reactor (10), but multiple polymerization energy supply parts may be installed according to operation conditions. In addition, the polymerization energy supply part may preferably be located over one side of the conveyer belt where a monomer composition is supplied and polymerization begins.

Moreover, the polymerization reactor may further include a monomer composition supply part (30) over one end of the conveyer belt of the first belt polymerization reactor. The polymerization reactor further including the monomer composition supply part (30) is as shown in Fig. 1. The polymerization reactor may further include a polymer gel discharge part (40) at the other end of the conveyer belt of the second belt polymerization reactor, and the polymerization reactor further including the polymer gel discharge part (40) is as shown in Fig. 1.

Moreover, the polymerization reactor may further include a polymer gel pulverization part (70) connected to the polymer gel discharge part (40). Then, polymerization energy from the second belt polymerization reactor is supplied to the second side of the sheet-type polymer gel to finally polymerize a sheet-type polymer gel (60). which may be discharged out of the polymerization reactor through the polymer gel discharge part (40), and primary pulverization may progress in the connected polymer gel pulverization part (70). The polymer gel pulverization part (70) is not specifically limited as long as it includes a pulverizer that is capable of primarily pulverizing the sheet-type polymer gel.

Specifically, the polymer gel pulverization part may include at least one pulverization device selected from the group consisting of a vertical pulverizer, a turbo cutter, a turbo grinder, a rotary cutter mill, a cutter mill, a disc mill, a shred crusher, a crusher, a chopper, and a disc cutter, but is not limited thereto.

According to another embodiment of the present invention, a polymerization reactor for the preparation of superabsorbent polymer is provided, including a first belt polymerization reactor and a second belt polymerization reactor that respectively include two or more rotation axes, a conveyer belt installed between the axes and formed so as to proceed in a predetermined direction by the rotation of the rotation axes, and a polymerization energy supply part positioned over the conveyer belt, and a polymer gel pulverization part positioned between the first belt polymerization reactor and the second belt polymerization reactor, wherein the polymer gel pulverization part and the second belt polymerization reactor are arranged so that a sheet-type polymer gel polymerized in the first belt polymerization reactor may be pulverized in the polymer gel pulverization part and then conveyed on the conveyer belt of the second belt polymerization reactor.

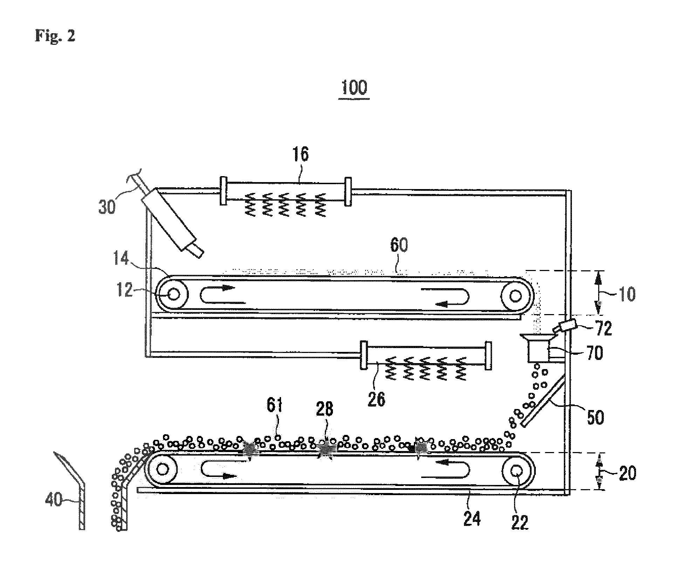

Fig. 2 schematically shows a polymerization reactor further including the polymer gel pulverization part (70) positioned between the first and second belt polymerization reactors as explained above. As shown in Fig. 2, the sheet-type polymer gel (60) having proceeded to the end of the first belt polymerization reactor (10) drops to the polymer gel pulverization part (70) by the movement of the conveyer belt of the first belt polymerization reactor and is pulverized to a predetermined size in the polymer gel pulverization part, and then the pulverized polymer gel (61) drops on the surface of the conveyer belt of the second belt polymerization reactor and progresses through polymerization by polymerization energy supplied from the polymerization energy supply part (26) of the second belt polymerization reactor along the proceeding direction of the belt.

Moreover, the polymerization reactor may further include a particle mixing part (28) formed on the belt of the second belt polymerization reactor. The particle mixing part (28) is as shown in Fig. 2. By the particle mixing part, the polymer gel particles supplied to the second belt polymerization reactor may be evenly supplied with polymerization energy from the second belt polymerization reactor and polymerized without aggregation.

The construction of the polymer gel pulverization part installed between the first belt polymerization reactor and the second belt polymerization reactor is not specifically limited as long as it may primarily pulverize the sheet-type polymer gel. Specifically, it may include a vertical pulverizer, a turbo cutter, a turbo grinder, a rotary cutter mill, a cutter mill, a disc mill, a shred crusher, a crusher, a chopper, a disc cutter, or a combination thereof, but is not limited thereto.

The polymerization reactor may further include an additive supply part (72) on the polymer gel pulverization part (70). The polymerization reactor further including the additive supply part is as shown in Fig. 2.

By the additive supply part, various additives for facilitating pulverization of the sheet-type polymer gel may be added, and specific examples of the additives that may be supplied may include an agent for preventing aggregation of a powder such as steam, water, a surfactant, an inorganic powder such as clay or silica, and the like, and a persulfate-type initiators, an azo type initiator, a thermal polymerization initiator such as hydrogen peroxide and ascorbic acid, an epoxy type cross-linking agent, a diol cross-linking agent, a cross-linking agent including a difunctional or multifunctional acrylate, and a cross-linking agent such as a monofunctional compound including hydroxyl group, but are not limited thereto.

Further, the polymerization reactor may further include a guide member for conveying the sheet-type polymer gel polymerized in the first belt polymerization reactor to the polymer gel pulverization part, or conveying the polymer gel pulverized in the polymer gel pulverization part on the conveyer belt of the second belt polymerization reactor.

According to yet another embodiment of the present invention, a polymerization reactor for preparation of a superabsorbent polymer is provided, including: a belt polymerization reactor that includes two or more rotation axes, a conveyer belt installed between the axes and formed so as to progress in a predetermined direction by the rotation of the rotation axes, and a first polymerization energy supply part positioned on the conveyer belt; and a second polymerization energy supply part (80) installed so as to supply polymerization energy from UV irradiation part (81) to both sides of a sheet-type polymer gel (60) that is polymerized in the belt polymerization reactor and drops at the end of the conveyer belt.

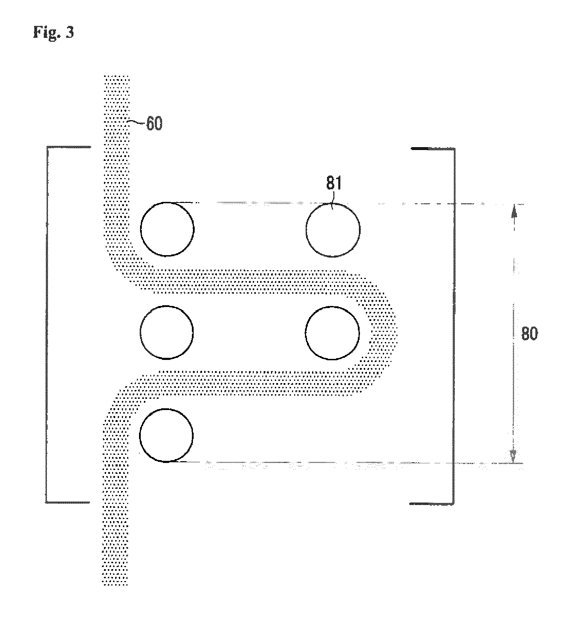

The second polymerization energy supply part may be designed in parallel with both sides of the falling sheet-type polymer gel (60) so as to supply polymerization energy from UV irradiation part (81) on both sides of the sheet-type polymer gel having proceeded to the end of the belt polymerization reactor. The second polymerization energy supply part (80) may be designed such that it may be arranged below the end of the conveyer belt in multiple stages, and the sheet-type polymer gel (60) is bent and moves along the multiple stages of the second polymerization energy supply part, as shown in Fig. 3.

According to yet another embodiment of the present invention, a method of preparing a superabsorbent polymer using the above-explained polymerization reactor is provided.

Specifically, the method of preparing a superabsorbent polymer in the polymerization reactor according to the above-explained embodiments includes: supplying a monomer composition including water-soluble ethylenically unsaturated monomers and a polymerization initiator to the conveyer belt of the first belt polymerization reactor; supplying polymerization energy to the first side of the monomer composition while proceeding on the conveyer belt of the first belt polymerization reactor and the monomer composition by the rotation of the rotation axes of the first belt polymerization reactor, so as to form a sheet-type polymer gel; conveying the sheet-type polymer gel on the conveyer belt of the second belt polymerization reactor so that polymerization energy may be supplied to the second side opposite to the first side of the sheet-type polymer gel to which polymerization energy is supplied from the first belt polymerization reactor; and supplying polymerization energy to the second side of the sheet-type polymer gel while proceeding on the conveyer belt of the second belt polymerization reactor and the sheet-type polymer gel by the rotation of the rotation axes of the second belt polymerization reactor, so as to progress with polymerization.

According to the above preparation method, since polymerization energy may be supplied throughout the whole volume of the monomer composition that is supplied to the conveyer belt, polymerization efficiency may be increased to improve production efficiency, and since polymerization energy is evenly delivered, a uniform polymerization reaction may progress to minimize residual monomer content, thus preparing a superabsorbent polymer with excellent properties.

According to yet another embodiment of the present invention, a method of preparing a superabsorbent polymer using a polymerization reactor further including a polymer gel pulverization part between the first belt polymerization reactor and the second belt polymerization reactor is provided.

Specifically, the method includes: supplying a monomer composition including water-soluble ethylenically unsaturated monomers and a polymerization initiator to the conveyer belt of the first belt polymerization reactor; supplying polymerization energy to the first side of the monomer composition while proceeding on the conveyer belt of the first belt polymerization reactor and the monomer composition by the rotation of the rotation axes of the first belt polymerization reactor, so as to form a sheet-type polymer gel; conveying the sheet-type polymer gel to the polymer gel pulverization part positioned between the first and second polymerization reactors; pulverizing the sheet-type polymer gel in the polymer gel pulverization part; conveying the polymer gel pulverized in the polymer gel pulverization part to the second belt polymerization reactor; and supplying polymerization energy to the polymer gel conveyed to the second belt polymerization reactor so as to progress with polymerization.

As such, by primarily pulverizing the sheet-type polymer gel formed in the first belt polymerization reactor and then supplying it to the second belt polymerization reactor and progressing with additional polymerization, polymerization energy may be evenly delivered throughout all the polymer gel particles to increase polymerization efficiency. In the step of delivering the sheet-type polymer gel to the pulverization part, at least one additive selected from a thermal polymerization initiator, an agent for preventing powder aggregation, or a cross-linking agent may be additionally supplied from the additive supply part. By adding the additives, pulverization efficiency may be increased, and polymerization efficiency in the second belt polymerization reactor may be further increased. The kinds of the thermal polymerization initiator, agent for preventing powder aggregation, and cross-linking agent are not specifically limited as long as they are commonly used for the preparation of a superabsorbent polymer.

Further, in the pulverization step, to increase polymerization efficiency in the second belt polymerization reactor, the polymer gel may be preferably pulverized to a diameter of about 1mm to 25mm, more preferably about 5mm to 20mm, most preferably about 7mm to 15mm.

According to yet another embodiment of the present invention, a method of preparing a superabsorbent polymer using a polymerization reactor for the preparation of a superabsorbent polymer including a second polymerization energy supply part installed such that polymerization energy may be supplied to both sides of the sheet-type polymer gel that is polymerized in the belt polymerization reactor and drops from the other end of the conveyer belt is provided.

Specifically, the method includes: supplying a monomer composition including water-soluble ethylenically unsaturated monomers and a polymerization initiator to the conveyer belt of the belt polymerization reactor; supplying polymerization energy to the first side of the monomer composition while proceeding on the conveyer belt of the belt polymerization reactor and the monomer composition by the rotation of the rotation axes of the belt polymerization reactor, so as to form a sheet-type polymer gel; conveying the sheet-type polymer gel having proceeded to the end of the belt polymerization reactor to the second polymerization energy supply part; and supplying polymerization energy from the second polymerization energy supply part to both sides of the sheet-type polymer gel so as to progress with polymerization.

The second polymerization energy supply part may have the form as shown in Fig. 3, wherein a sheet-type polymer gel falling from the belt polymerization reactor is bent and moves between the multi-stage second polymerization energy supply part, and polymerization energy is evenly supplied to both sides of the sheet-type polymer gel to increase polymerization efficiency.

In the method of preparing a superabsorbent polymer according to the above embodiments, it is preferable that the moving speeds of the conveyer belts of the first and the second belt polymerization reactors are the same for convenience of operation. The moving speed may be appropriately determined considering supply speed of the monomer composition, the length and width of the belt, and the like, and it may be about 0.5m/min to 10m/min, and preferably about 1m/min to 9m/min considering polymerization efficiency.

Further, the monomer composition includes a polymerization initiator. If UV is irradiated in the polymerization energy supply part, it may include a photopolymerization initiator, and if hot wind is supplied, it may include a thermal polymerization initiator. However, even if only photopolymerization progresses by UV irradiation, since a certain amount of heat may be generated by UV irradiation and heat may be generated to some degree by the progress of the polymerization reaction which is an exothermic reaction, a thermal polymerization initiator may be further included. Specifically, the thermal polymerization initiator may include a persulfate-type initiator, an azo-type initiator, hydrogen peroxide, ascorbic acid, or a combination thereof.

Specifically, examples of the persulfate-type initiator may include sodium persulfate (Na₂S₂O₈), potassium persulfate (K₂S₂O₈), ammonium persulfate ((NH₄)₂S₂O₈), and the like, and examples of the azo-type initiator may include 2,2-azobis(2-amidinopropane) dihydrochloride, 2,2-azobis-(N,N-dimethylene)isobutyramidine dihydrochloride, 2-(carbamoylazo)isobutylonitrile, 2,2-azobis[2-(2-imidazolin-2-yl)propane] dihydrochloride, 4,4-azobis-(4-cyanovaleric acid), and the like. More various thermal initiators are described in Odian, "Principles of

Polymerization (Wiley, 1981)", p203.

The photopolymerization initiator may include benzoin ether, dialkyl acetophenone, hydroxyl alkylketone, phenyl glyoxylate, benzyl dimethyl ketal, acyl phosphine, α-aminoketone, and a combination thereof. Specific examples of the acyl phosphine may include commonly used Lucirin TPO, i.e., 2,4,6-trimethyl-benzoyltrimethyl phosphine oxide. More various photopolymerization initiators are described in Reinhold Schwalm, "UV Coatings: Basics. Recent Developments and New Applications (Elsevier 2007)", p115.

The aqueous ethylenically unsaturated monomer is not specifically limited as long as it is commonly used for preparation of a superabsorbent polymer. It may include anionic monomers and salts thereof, non-ionic hydrophilic group containing monomers, amino group containing unsaturated monomers, and quatemarized compounds thereof, and a combination thereof.

Specific examples of the aqueous ethylenically unsaturated monomer may include: anionic monomers and salts thereof such as acrylic acid, methacrylic acid, maleic anhydride, fumaric acid, crotonic acid, itaconic acid, 2-acryloyl ethane sulfonic acid, 2-methacryloyl ethane sulfonic acid, or 2-(meth)acrylamide-2-methyl propane sulfonic acid; non-ionic hydrophilic containing monomers such as (meth)acrylamide, N-substituted (meth)acrylate, 2-hydroxyethyl (meth)acrylate, 2-hydroxypropyl(meth)acrylate, methoxy polyethylene glycol (meth)acrylate or polyethylene glycol (meth)acrylate; and amino group containing unsaturated monomers and quaternarized compounds thereof such as (N,N)-dimethylaminoethyl (meth)acylate or (N,N)-dimethylaminopropyl (meth)acrylamide; and a combination thereof

More preferably, acrylic acid or a salt thereof may be used, and if acrylic acid or a salt thereof is used as the monomer, a superabsorbent polymer with particularly improved absorbance may be obtained.

The concentration of the aqueous ethylenically unsaturated monomers in the monomer composition may be appropriately determined considering polymerization time, reaction conditions, and the like, and it may preferably be about 25 to 55wt%, more preferably about 30 to 52wt%, and most preferably 35 to 50wt%. If the concentration of the aqueous ethylenically unsaturated monomers is less than 25wt%, it may be unfavorable in terms of economic efficiency, and if it exceeds 55wt%, pulverization efficiency may be low during pulverization of the polymerized polymeric sheet.

The supply speed of the monomer composition may be appropriately determined considering the moving speed of the conveyer belt, and the supply amount and strength of the polymerization energy supplied in the polymerization energy supply part. However, for an efficient cross-linking polymerization reaction throughout the whole volume of the monomer composition supplied to the belt and production efficiency, the monomer composition may be supplied to the conveyer belt with a thickness of about 0.5cm to 5cm. More preferably, it may be supplied with a thickness of about 0.7 to 4cm, and most preferably about 1 to 3.5cm.

In the preparation method according to the above-described embodiments, if UV is irradiated in the polymerization energy supply part, the light irradiation amount of the UV irradiation part may be appropriately determined considering the concentration of the supplied monomer composition, the supplied thickness on the conveyer belt, the moving speed of the conveyer belt, the total length of the conveyer belt, and the like. Preferably, UV may be irradiated in the amount of about 0.1mW/cm² to 300mW/cm², more preferably about 0.5 to 200mW/cm², and most preferably about 0.8 to 150mW/cm².

Further, if a superabsorbent polymer is prepared using the polymerization reactor including the first belt polymerization reactor and the second polymerization reactor, the polymerization energy may be supplied from the polymerization energy supply parts with the same strength as that of the first belt polymerization reactor and the second belt polymerization reactor for convenience of operation. However, since the sheet-type polymer gel or pulverized polymer gel supplied to the second belt polymerization reactor has been polymerized in the first belt polymerization reactor to some degree, polymerization energy may be supplied to the second belt polymerization reactor with the strength of below 100% compared to the energy supplied from the polymerization energy supply part of the first belt polymerization reactor.

If the polymerization energy supply part of the second belt polymerization reactor is a UV irradiation part, it may preferably be irradiated in the light irradiation amount of about 0.1mW/cm² to 300mW/cm², and it may be irradiated in the light irradiation amount of 25 to 100%. compared to the light irradiation amount in the UV irradiation part of the first belt polymerization reactor.

Further, in the above-described embodiments, the moisture content of the polymer sheet after completing the second polymerization in the second belt polymerization reactor may be commonly about 30wt% to 65wt%. The moisture content of the polymer sheet is the content of extant moisture with regard to the total polymer weight, and is defined as a value found subtracting the weight of the polymer in a dried state from the weight of the polymer. Specifically, as described in Experimental Example 1 below, it is defined as a calculation value obtained by measuring the weight loss according to moisture evaporation in the polymer during the process of increasing the temperature of the polymer to dry it by heating by infrared radiation. As described in Experimental Example 1, the moisture content is measured under the drying conditions where the temperature is increased from room temperature to 180°C, and it is then maintained at 180°C for total drying time of 20 minutes including temperature the increasing step of 5 minutes.

Further, the polymerized sheet-type polymer gel or polymer gel particles may be pulverized. By pulverization, drying efficiency of the after-performed drying step may be increased. During the pulverization, the polymer sheet may be commonly pulverized to several millimeters to a few hundreds of millimeters. Preferably, considering drying efficiency, it may be pulverized such that a diameter of the pulverized polymer may become about 2 to 20mm. It may preferably be pulverized such that the diameter of hydrous gel-type polymer particles after pulverization may become about 2 to 20mm. If it is pulverized to a diameter of less than 2mm, excessive energy may be consumed for pulverization, and if it exceeds 20mm, the surface area of the pulverized polymer gel may be too small and efficiency of the alter-performed drying step may not be increased. More preferably, it may be pulverized such that the diameter of the hydrous gel-type polymer particles after pulverization may become about 3 to 10mm, most preferably about 3 to 8mm.

Further, the pulverized polymer particles may be dried to finally prepare a superabsorbent polymer in the form of a powder. The drying may be performed such that the moisture content of the hydrous gel-type polymer may become about 1 to 5wt%. Immediately before or after the drying, the hydrous gel-type polymer particles may be mixed with a surface cross-linking agent to surface-treat the polymer particles. By the surface treatment, a superabsorbent polymer with excellent properties such as pressurized absorption power, and the excellent property of delivering moisture while having low gel blocking, if used for a final product of a diaper, may be prepared.

The surface cross-linking agent is not specifically limited as long as it is a compound capable of reacting with the functional group of the polymer, and preferably, it may include a multivalent alcohol, a multivalent epoxy compound, a multivalent amine compound, alkylene carbonate, a multivalent oxazoline compound, a halo epoxy compound, an addition product of a halo epoxy compound and polyamine, a mixture of a polyamide and an epihalohydrin, and a combination thereof.

Specific examples of the multivalent alcohol may include propylene glycol, glycerin, butanediol, and the like, specific examples of the multivalent epoxy compound may include ethylene glycol diglycidyl ether, and specific examples of the multivalent amine may include polyethyleneimine, and the like.

The content of the surface cross-linking agent that is added to surface-treat the polymer particles may be appropriately determined according to the kinds of added surface cross-linking agents or reaction conditions, and it may be about 0.001 to 5 parts by weight, preferably about 0.01 to 3 parts by weight, and more preferably about 0.05 to 2 parts by weight, based on 100 parts by weight of the polymer.

The polymer with moisture content of about 1 to 5wt%, which is dried, surface-treated with the surface cross-linking agent, and then dried, or dried and then surface-treated with the surface cross-linking agent, is finally pulverized and provided in the form of a superabsorbent polymer powder with a particle diameter of about 150 to 850/µm. The construction of the pulverizer used for the preparation of a superabsorbent polymer powder is not specifically limited as long as it may pulverize the polymer to the form of a polymer powder. Specifically, a pin mill, a hammer mill, a screw mill, a roll mill, a disc mill, a jog mill, and the like may be used.

Hereinafter, the present invention will be explained in detail by the following examples. However, these examples are only to illustrate the invention, and the scope of the invention is not limited thereto.

### Example: Preparation of a polymer sheet

### Example 1: using a polymerization reactor including belt polymerization reactors arranged in two stages

400g of acrylic acid was measured, and 10g of a solution of triethylene diacrylate (TEGDA) diluted in 10% acrylic acid and 2.1g of a solution of a photoinitiator (Lucirin TPO: 2,4,6-trimethyl-benzoyl-trimethyl phosphine oxide) diluted in 2% acrylic acid were mixed therewith to prepare a mixed solution (mixed solution A). Separately, 456g of 35% caustic soda was diluted in 250g of water to prepare a mixed solution (mixed solution B). The mixed solutions A and B were introduced into a temperature controlled jacketed reactor and sufficiently mixed while agitating them, and the temperature of the mixed solution was maintained so as to not exceed 70°, thus preparing a monomer composition including acrylic acid and acrylate.

Further, two belt polymerization reactors respectively including a conveyer belt made of silicon with a length of 1m and a width of 20cm were installed in two stages of upper and lower stages, and then black light UV lamps were respectively installed 20cm above the top of each conveyer belt, thus preparing a polymerization reactor.

On the belt of the first belt polymerization reactor positioned at the top stage, a liquid monomer composition was supplied such that the thickness became 2cm, and then the belt was allowed to move at a speed of 50cm/min and UV was irradiated in the light amount of 1.4mW/cm² to initiate polymerization.

The sheet-type polymer polymerized in the first belt polymerization reactor dropped on the conveyer belt of the second belt polymerization reactor, and the back side of the sheet-type polymer to which UV was not irradiated in the first belt polymerization reactor was irradiated to progress with polymerization. The irradiation amount of the UV irradiation part of the second belt polymerization reactor was controlled to 1.4mW/cm².

The second belt polymerization reactor was operated while fixing the belt moving speed to 50cm/min.

### Example 2: Preparation of a polymer sheet

A polymer sheet was obtained by progressing with polymerization under the same conditions as Example 1 and using the same polymerization reactor as Example 1, except that the conveyer belts of the first and second belt polymerization reactors were stainless steel mesh belts instead of silicon.

### Example 3 : Preparation of a polymer sheet

A polymerization sheet was obtained by the same method as Example 1, except that after completing polymerization in the first belt polymerization reactor, the polymer sheet was pulverized using a cutter and then conveyed to the second belt polymerization reactor.

### Comparative Example 1 : Preparation of a polymer sheet in a conveyer belt of one stage

A belt polymerization reactor with a length of 2m and a width of 20cm was prepared. The monomer composition prepared in Example 1 was supplied to the belt of the belt reactor operating at a moving speed of 50cm/min to a deposition thickness of 2cm. Simultaneously with the supplying of the monomer composition, UV was irradiated from the UV irradiation part installed on top of the belt in the irradiation amount of 1.4mW/cm² to progress with a photopolymerization reaction, thereby obtaining a polymer sheet. The UV irradiation part in the belt polymerization reactor according to Comparative Example 1 was installed 20cm above the belt.

### Comparative Example 2: Reparation of a Polymer sheet

A polymer sheet was obtained by polymerizing under the same conditions as Comparative Example 2, except that the belt was operated at the moving speed of 1m/min.

### Comparative Example 3: Preparation of a polymer sheet

A belt polymerization reactor wherein one additional UV irradiation part was installed at the end of the belt polymerization reactor was used. The UV irradiation part installed at the end of the belt polymerization reactor was designed such that UV was irradiated to the monomer composition in the light irradiation amount of 5.6mW/cm² for 30 seconds.

Thus, a polymer sheet was obtained by progressing with polymerization in the same method as Comparative Example 1, except that UV irradiation further progressed strongly and shortly at the end of the belt, which is an end point of polymerization.

### Comparative Example 4: Preparation of polymer by polymerization after foam formation

Polymerization progressed under the same conditions as Comparative Example 1, except that the temperature of the supplied monomer composition was controlled to about 80°C to allow formation of foam. Foam began to be generated after 15 seconds passed after introducing the monomer composition of which the temperature was controlled to about 80 °C, the foam occurred toward a width direction of the belt and the upper stage, and it was observed that foam occurred in the volume of 50 times or more of the volume of the initial monomer composition.

### After primary pulverization of the Polymers of Example and Comparative Examples, final drying and final pulverization

The polymer sheets prepared according to the above examples and comparative examples were primarily pulverized using a meat chopper, and the primarily pulverized polymer particles were introduced into an air-convention oven (Jeotech) set to 150°C and dried for 3 hours.

The dried hydrous gel-type polymer particles were pulverized in a food mixer (Hanil Electric, Model name FM681) for 30 seconds, and then polymer powders with a diameter of 300 to 600µm were classified using a mesh net of 30 to 50 mesh, and the properties of the polymer were evaluated.

### Experimental Example: Evaluation of moisture content of hydrous gel-type polymer and properties of superabsorbent Polymer powder

### Experimental Example 1: Evaluation of moisture content of hydrous gel-type polymer

The moisture contents of the polymers according to the above examples and comparative examples were measured as follows.

The moisture contents of the polymers were measured by measuring weight loss according to moisture evaporation in the polymer during the process of increasing the temperature of the polymer and drying it by heating by infrared radiation. The drying conditions included increasing the temperature to 180°C and maintaining it at 180 °C, and the total drying time was set to 20 minutes including the temperature increasing step of 5 minutes.

### Experimental Example 2: Measurement of residual monomer content

1g of each of the polymer powders obtained in Example 1 and the comparative examples was agitated in a beaker containing 1kg of water and equipped with a 2.5cm spin bar at 500rpm for 1 hour to extract unreacted acrylic acid. The extracted solution was analyzed using liquid chromatography (LC) to quantify the amount of residual acrylic acid.

### Experimental Example 3: Evaluation of polymerization efficiency (conversion rate)

0.5g of hydrous gel before drying was agitated in a beaker containing 1kg of water and equipped with a 2.5cm spin bar at 500rpm for 1 hour to extract unreacted acrylic acid. The solution was analyzed using liquid chromatography (LC) to quantify the amount of residual acrylic acid, from which conversion rate was calculated.

To evaluate the properties of the superabsorbent polymer powders of the examples and comparative examples, the following experiments were conducted.

### Experimental Example 4: Water holding capacity

Water holding capacity was measured for the particles classified by the above-explained method. The water holding capacity was measured according to EDANA method WSP 241.2. Specifically, 0.2g of a sample that was classified as 30~50 mesh was put in a tea bag, soaked in a 0.9% brine solution, and then water was removed in a centrifuge set to 250G for 3 minutes, and the weight was measured to measure the amount of water held by the superabsorbent polymer.

### Experimental Example 5: Water soluble ingredient

For the particles classified by the above-explained method, water-soluble ingredients were measured. The measurement of water-soluble ingredients was according to EDANA method WSP 270.2. Specifically, 1.0g of the sample that was classified as 30~50 mesh was introduced into 200g of a 0.9% brine solution, soaked for 16 hours with agitation at 500rpm, and then the aqueous solution was filtered with a filter paper. The filtered solution was primarily titred with a caustic soda solution of pH 10.0, and then reverse titration was conducted with a hydrogen chloride solution of pH 2.7 and the amount of a polymer material that was not cross-linked was calculated as water-soluble ingredients.

**[Table 1]**

| | Moisture content of polymer sheet (wt%) | Residual monomer content (ppm) | Polymerization efficiency (conversion rate) (%) | Water holding capacity (g/g) | Water-soluble ingredients (wt%) |
|---|---|---|---|---|---|
| Example 1 | 49.8 | 1200 | 99.3 | 41 | 13 |
| Example 2 | 51.4 | 2100 | 98.8 | 42 | 14 |
| Example 3 | 54.2 | 1300 | 99.1 | 40 | 12 |
| Comparative Example 1 | 50.5 | 3500 | 97.2 | 38 | 13 |
| Comparative Example 2 | 45.2 | 13000 | 96.1 | 48 | 25 |
| Comparative Example 3 | 48.8 | 2700 | 98.3 | 37 | 12 |
| Comparative Example 4 | 47.2 | 21.000 | 94.8 | 42 | 21 |

From the above experiment results, it is confirmed that the superabsorbent polymer polymerized in the two-staged belt polymerization reactor had low residual monomer contents and high polymerization efficiency (conversion rate). Specifically, it is confirmed that if the polymerization reactors of Examples 1 to 3 are used, UV is evenly irradiated on both sides of the polymer and polymerization evenly occurs all over the surface of the polymer, and thus the residual monomer content is low and a superabsorbent polymer with high polymerization efficiency may be obtained, compared to Comparative Examples 1 to 3 wherein a belt polymerization reactor of the same length was used.

Further, it is confirmed that the superabsorbent polymers prepared according to the examples had high water holding capacity and simultaneously a lower water-soluble ingredient content, compared to the superabsorbent polymers of the comparative examples.

The water-holding capacity of a superabsorbent polymer, which is water absorbing performance, is related to basic performance of superabsorbent polymer, and the water-soluble ingredient content is the content of ingredients that can be solubilized in water in a superabsorbent polymer, for example, the content of a low molecular weight polymer ingredient.

In general, as the water-holding capacity is higher, it is evaluated that the properties of a superabsorbent polymer are excellent, and if the water-soluble ingredient content is lower, it is evaluated that the properties of superabsorbent polymer are excellent because there is a small unpleasant feeling of a user due to wetness when applied to household items such as a diaper and the like.

However, since it is generally known that the content of water-soluble ingredients increases as the water-holding capacity increases, there is a difficulty in improving overall properties of a superabsorbent polymer.

However, since the superabsorbent polymers according to Examples 1 to 3 are prepared in a two-staged belt polymerization reactor, mixing, polymerization, pulverization, and the like of the monomer composition are evenly conducted, and thus it exhibits excellent properties of low water-soluble ingredient content and yet high water holding capacity, compared to superabsorbent polymers prepared by conventional methods.

## Claims

**1.** A polymerization reactor for the preparation of a superabsorbent polymer, comprising:
a first belt polymerization reactor and a second belt polymerization reactor that respectively comprise two or more rotation axes, a conveyer belt installed between the axes and formed so as to proceed in a predetermined direction by the rotation of the rotation axes, and a polymerization energy supply part positioned over the conveyer belt; and
a polymer gel pulverization part positioned between the first belt polymerization reactor and the second belt polymerization reactor,
wherein the polymer gel pulverization part and the second belt polymerization reactor are arranged so that a sheet-type polymer gel polymerized in the first belt polymerization reactor may be pulverized in the polymer gel pulverization part, and then conveyed on the conveyer belt of the second belt polymerization reactor.

**2.** The polymerization reactor of claim 1, further comprising a particle mixing part formed on the belt of the second belt polymerization reactor

**3.** The polymerization reactor of claim 1, further comprising an additive supply part on the polymer gel pulverization part.

**4.** The polymerization reactor of claim 1, further comprising a guide member for conveying a sheet-type polymer gel polymerized in the first belt polymerization reactor to the polymer gel pulverization part, or conveying a polymer gel pulverized in the polymer gel pulverization part to the conveyer belt of the second belt polymerization reactor.

**5.** A method of preparing a superabsorbent polymer in the polymerization reactor of claim 1, comprising:
supplying a monomer composition comprising water-soluble ethylenically unsaturated monomers and a polymerization initiator to the conveyer belt of the first belt polymerization reactor;
supplying polymerization energy to the first side of the monomer composition while moving the conveyer belt of the first belt polymerization reactor and the monomer composition by the rotation of the rotation axes of the first belt polymerization reactor, so as to form a sheet-type polymer gel;
conveying the sheet-type polymer gel to the polymer gel pulverization part positioned between the first polymerization reactor and the second polymerization reactor;
pulverizing the sheet-type polymer gel in the polymer gel pulverization part;
conveying the polymer gel pulverized in the polymer gel pulverization part to the second belt polymerization reactor; and
supplying polymerization energy to the polymer gel conveyed to the second belt polymerization reactor so as to progress with polymerization.

**6.** The method of claim 5, wherein the conveyer belt has a moving speed of 0.5m/min to 10m/min.

**7.** The method of claim 5, wherein the monomer composition is supplied with a thickness of 0.5cm to 5cm on the conveyer belt.

**8.** The method of claim 5, wherein UV is irradiated in a light irradiation amount of 0.1mW/cm² to 300mW/cm² so as to supply polymerization energy.
